# EUROPEAN PATENT SPECIFICATION

(11) **EP 2 661 383 B1**
(45) Date of publication and mention of the grant of the patent: **25.10.2017**
(21) Application number: 12700879.5
(22) Date of filing: 03.01.2012
(51) Int. Cl.: B60R 13/02

(54) **FLEXIBLE INTERIOR TRIM COMPONENT WITH A COVER LAYER**
FLEXIBLE INNENAUSSTATTUNGSKOMPONENTE MIT EINER DECKSCHICHT
COMPOSANT DE GARNITURE INTÉRIEURE FLEXIBLE AYANT UNE COUCHE DE REVÊTEMENT

(30) Priority: 03.01.2011 US 201161429358 P
(43) Date of publication of application: 13.11.2013
(73) Proprietor: Johnson Controls Technology Company, Milwaukee, WI 53209 (US)
(72) Inventor: HIPSHIER, Jason, Hudsonville Michigan 49426 (US); HANSEN, Scott, Holland Michigan 49424 (US)
(74) Representative: Trinks, Ole
(86) International application number: PCT/US2012/020105
(87) International publication number: WO 2012/094340

(56) References cited:
- JP-A- S6 475 224
- JP-A- 2005 066 219
- JP-A- 2005 219 595
- JP-A- 2006 062 556
- US-A1- 2010 133 866

## Description

### CROSS REFERENCE TO RELATED APPLICATION

This application claims priority from and the benefit of U.S. Provisional Application Serial No. 61/429,358, entitled "FLEXIBLE INTERIOR TRIM COMPONENT WITH A COVER LAYER", filed January 3, 2011.

### BACKGROUND

The invention relates generally to a flexible interior trim component for a vehicle, and more particularly, to a flexible interior trim component having a cover layer. US2010/0133866 A1 is the closest prior art document and discloses an interior trim component for a vehicle interior storage compartment according to the preamble of claim 1.

Vehicle storage compartments may be positioned throughout an interior of a vehicle to store cargo and other small items. For example, an overhead console may include a storage compartment suitable for storing sunglasses, driving glasses, or other items. Other storage compartments may be located within a center console, an armrest, seats, door panels, or other areas of the vehicle interior. Certain storage compartments include a door configured to secure the contents of the compartment and/or hide the contents from view.

While a variety of door configurations may be employed, tambour doors are generally well-suited for storage compartments having curved openings. Typical tambour doors include a series of interlocked parallel ribs or segments that may rotate with respect to one another. In this manner, the tambour door may flex in a direction perpendicular to the orientation of the parallel segments. Such a configuration may enable the tambour door to match the contours of the curved storage compartment opening, thereby facilitating movement of the tambour door with respect to the storage compartment opening. Unfortunately, because the ribs are generally constructed from substantially rigid material, the show surface of the tambour door may be hard and/or stiff. In addition, recesses between the ribs may collect dirt and/or other contaminants, thereby degrading the appearance of the door.

### BRIEF DESCRIPTION OF THE INVENTION

The present invention relates to an interior trim component including multiple substantially parallel ribs each configured to engage a track to facilitate movement of the interior trim component along the track. The interior trim component also includes a cushion having an inner surface and an integral outer skin such that the inner surface is coupled to the substantially parallel ribs. The interior trim component further includes a cover layer having a show surface and a rear surface, where the rear surface is secured to the integral outer skin of the cushion.

The present invention also relates to an interior trim component including substantially parallel ribs, and a cushion coupled to the substantially parallel ribs such that the interior trim component is capable of bending in a direction substantially perpendicular to an orientation of the substantially parallel ribs. The cushion also includes a cover layer at least partially disposed about the cushion. The cover layer includes a show surface and a rear surface, and the cushion is molded to the rear surface to secure the cover layer to the cushion.

The present invention further relates to a method of manufacturing an interior trim component including injecting resin into a first mold having multiple substantially parallel grooves to form corresponding substantially parallel ribs. The method also includes lining a cavity of a second mold with a cover layer such that a show surface of the cover layer is disposed adjacent to the cavity. The method further includes transferring the substantially parallel ribs to the second mold, and pouring foam into the second mold such that the foam forms a cushion bonded to the substantially parallel ribs and to a rear surface of the cover layer.

### DRAWINGS

FIG. 1 is a perspective view of an exemplary vehicle that may include one or more storage compartments each having a flexible door with a cover layer.
FIG. 2 is a perspective view of an exemplary center console that may be located within an interior of the vehicle of FIG. 1.
FIG. 3 is a perspective view of the center console of FIG. 2 with a flexible door in an open position.
FIG. 4 is a perspective view of an exemplary flexible door with a cover layer that may be employed within the center console of FIG. 2.
FIG. 5 is a cross-sectional view of a first embodiment of the flexible door with a cover layer, taken along line 5-5 of FIG. 4.
FIG. 6 is a cross-sectional view of a second embodiment of the flexible door with a cover layer, having a thicker cushion.
FIG. 7 is a cross-sectional view of a third embodiment of the flexible door with a cover layer, having a cushion without an integral outer skin.
FIG. 8 is a detailed cross-sectional view of the flexible door, illustrating compression of the cushion and corresponding flexure of the integral outer skin and the cover layer.
FIG. 9 is a perspective view of ribs formed by an injection molding process, including attached runners and connectors.
FIG. 10 is a perspective view of the ribs, as shown in FIG. 9, after the cushion has been formed by pouring foam into a mold and a cover layer has been partially secured to the integral outer skin of the cushion.
FIG. 11 is a process flow diagram of an exemplary process that may be utilized to form the flexible door.

### DETAILED DESCRIPTION

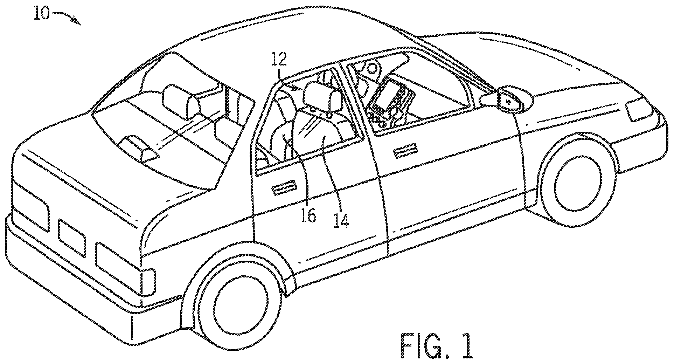

FIG. 1 is a perspective view of an exemplary vehicle 10, including an interior 12 having seats 14 and a center console 16. As discussed in detail below, the center console 16 and/or other areas within the interior 12 may include a flexible interior trim component having a cover layer, such as a flexible door enclosing a storage compartment. For example, certain storage compartments may employ a flexible tambour door having multiple substantially parallel ribs. These ribs may be configured to engage a track, thereby facilitating movement of the tambour door along an opening of the storage compartment. The tambour door may also include a cushion having an interior surface facing an interior of the storage compartment. In some embodiments, the cushion also includes an integral outer skin. The interior surface of the cushion may be coupled to the substantially parallel ribs such that the tambour door may flex in a direction perpendicular to the orientation of the substantially parallel ribs. Such a configuration may enable the tambour door to match the contours of a curved storage compartment opening, thereby facilitating movement of the tambour door with respect to the storage compartment opening. As discussed in detail below, the cushion includes an integral outer skin formed during the cushion molding process. Furthermore, a cover layer may be secured to the cushion by an adhesive connection or via the cushion molding process. The cover layer may serve to protect the cushion while providing a desired appearance.

As will be appreciated, typical tambour doors include a series of interlocked or otherwise joined parallel ribs or segments that may rotate with respect to one another. To facilitate tambour door segment rotation, a recess may be positioned adjacent to each segment. These recesses may collect dirt and/or other contaminants, thereby degrading the appearance of the door. In addition, as the tambour door flexes, adjacent segments may rotate toward one another, thereby reducing the width of the intervening recesses. The decreasing width of the recesses may establish undesirable pinch points between adjacent segments. Furthermore, because the segments are generally constructed from substantially rigid material, the show surface of the tambour door may be hard and/or stiff. By providing a cushion having a cover layer, the present embodiments may eliminate these recesses and establish a soft show surface. As a result, any dirt or other contaminants which collect on the cover layer of the tambour door may be easily removed. In addition, the possibility of pinching between segments may be substantially reduced or eliminated. Furthermore, the show surface of the cover layer may enable the tambour door to serve as an armrest for vehicle occupants, thereby reducing the space utilized by a separate armrest and storage compartment door.

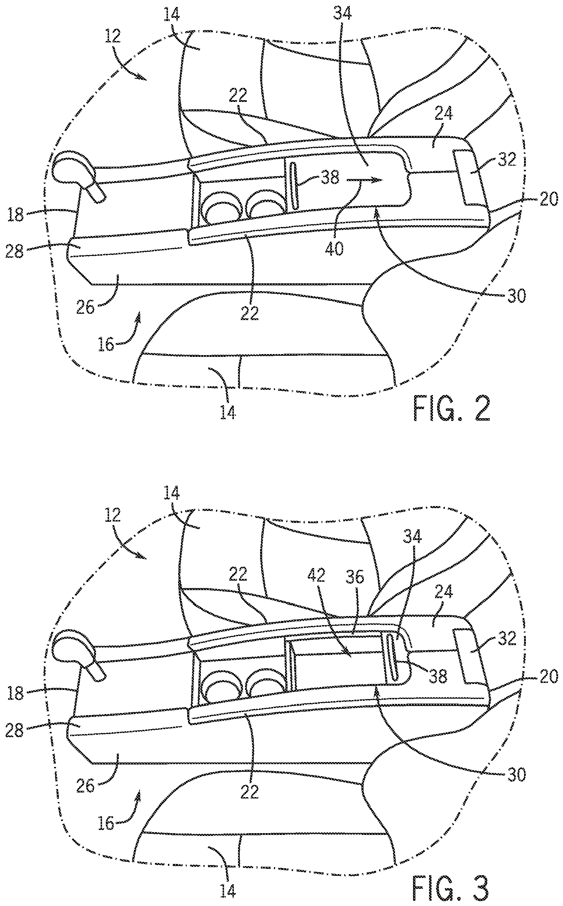

FIG. 2 is a perspective view of an exemplary center console 16 that may be located within an interior of the vehicle shown in FIG. 1. As discussed in detail below, the center console 16 may include a storage compartment enclosed by a flexible tambour door having a cover layer. As illustrated, the console 16 is coupled to a floor of the vehicle interior 12 between a driver seat 14 and a passenger seat 14. In the present configuration, the console 16 is configured to provide a storage area and an armrest for an occupant of one or both seats 14. The console 16 is generally prismatic, having a front wall 18, a rear wall 20, two opposed and generally symmetrical side walls 22 and a top surface 24.

The console 16 also includes two side panels 26 which form the main body of the console 16. In the present configuration, each side panel 26 provides one of the side walls 22 of the console 16 and portions of the rear wall 20, the front wall 18 and the top surface 24. As illustrated, the side walls 22 include a compound-curved upper contour having both convex and concave portions, thereby transitioning between the raised rear wall 20 and the lower front wall 18. The top edges 28 of the side panels 26 form the curved top surface 24. The top surface 24 includes an opening 30 that enables an occupant to access an interior of the console 16. In certain configurations, the console 16 includes a rear panel 32 forming a portion of the rear wall 20 and/or the top surface 24.

In the present configuration, the console 16 includes a door 34 configured to transition between an open position and the illustrated closed position. The door 34 includes a handle 38 that enables an occupant to slide the door 34 between the two positions. As discussed in detail below, sliding the door 34 toward the open position in the direction 40 will expose an interior of a storage compartment located within the console 16. In certain configurations, the door 34 is a tambour door having a series of substantially parallel ribs coupled to a cushion. The ribs are configured to engage a track within the side walls 22, while the cushion enables the door 34 to flex and accommodate the contours of the opening 30. The door 34 also includes a cover layer secured to an outer surface of the cushion to provide a desired appearance and to protect the cushion. The cover layer is a flexible material that may flex consistently with the cushion to accommodate the contours of the opening 30. The cushion and the cover layer also enable the door 34 to serve as an armrest for the vehicle occupants, thereby reducing the space associated with providing a separate door 34 and armrest.

While the present tambour door is described with reference to the center console 16, it should be appreciated that alternative embodiments may employ similar tambour doors positioned throughout the interior 12 of the vehicle 10. For example, a storage compartment located within an overhead console, door panel, instrument panel, or other region of the interior 12 may include a flexible door having a cover layer. Furthermore, other flexible interior trim components, in addition to the doors described above, may include similar parallel ribs, a cushion, and a cover layer. As discussed in detail below, the cover layer may include various materials and have various configurations to enhance the appearance of the component.

FIG. 3 is a perspective view of the center console 16 of FIG. 2 with the flexible door 34 in an open position. As illustrated, the side walls 22 include rails or tracks 36 configured to facilitate movement of the door 34 in the direction 40. In certain configurations, the tracks 36 include a C-shaped cross section, and may be coupled to the side panels 26 or integrally formed within the side panels 26. As discussed in detail below, the substantially parallel ribs of the tambour door 34 include protrusions which engage the tracks 36 and support the door 34, while the attached cushion enables the door 34 to flex, thereby accommodating the contours of the opening 30. As illustrated, transitioning the door 34 to the open position exposes an interior 42 of the storage compartment within the center console 16.

As will be appreciated, a vehicle occupant may close the door 34 by grasping the handle 38 and moving the door 34 toward the front wall 18 of the center console 16. Because a cover layer is secured to the outer surface of the cushion, a show surface of the cover layer faces the interior 12 of the vehicle 10. As a result, the possibility of being pinched by segments of the door 34 may be substantially reduced or eliminated. Once in the closed position, the cover layer of the door 34 may provide a suitable surface for an armrest and/or enhance the appearance of the vehicle interior 12.

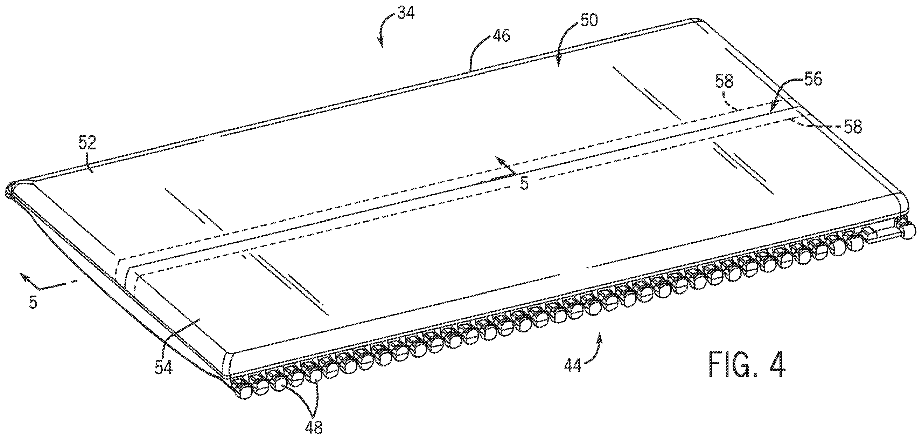

FIG. 4 is a perspective view of an exemplary flexible door with a cover layer that may be employed within the center console of FIG. 2. As illustrated, the flexible door 34 includes multiple substantially parallel ribs 44 coupled to a padded substrate or cushion 46. The ribs 44 are configured to engage the tracks 36 of the console 16 to support the door 34 and to facilitate movement of the door 34 across the opening 30. In the illustrated embodiment, the ribs 44 include protrusions 48 configured to interlock with a corresponding recess within each track 36. As discussed in detail below, the ribs 44 are coupled to a surface of the cushion 46 facing the interior 42 of the console 16, thereby forming a unitary structure. In this configuration, the door 34 may flex in a direction perpendicular to the orientation of the substantially parallel ribs 44, thereby enabling the tambour door to match the contours of a curved storage compartment opening. Furthermore, the cushion 46 includes a cover layer 50 having a show surface that provides a smooth, consistent appearance to the outer surface of the flexible door 34.

As discussed in detail below, the ribs 44 may be formed by an injection molding process, and may therefore be composed of any suitable material for injection molding. For example, the ribs 44 may be composed of a thermoplastic polymer, such as polypropylene, polycarbonate, or acrylonitrile butadiene styrene. It should be appreciated that the ribs 44 may be composed of other materials suitable for injection molding in alterative embodiments. In addition, the ribs 44 may include a chemical blowing agent and/or any other suitable additives.

In certain embodiments, the cushion 46 is formed by a molding process in which two reactive foam compounds are mixed and poured into an open mold having the desired shape of the cushion 46. The mold is then closed and the mixture is allowed to expand and cure. By placing the ribs 44 into the mold prior to pouring the foam, the foam will bond to the ribs 44 during the curing process. As a result, a unitary flexible component will be formed. Furthermore, in some embodiments, material chemistry as well as temperature variations within the mold may induce a high density flexible outer skin to form on the outer surface of the low density foam cushion. The resulting cushion 46 may have a substantially smooth or textured integral outer skin, while providing sufficient flexibility to enable the tambour door 34 to accommodate the contours of the curved storage compartment opening 30. In other embodiments, various foam compounds and/or temperatures may be used that substantially reduce or eliminate the possibility of forming the high density flexible outer skin on the outer surface of the low density foam cushion. In such embodiments, the entire cushion 46 may have a substantially uniform low density.

As previously discussed, the flexible door 34 may include a handle configured to facilitate movement of the door 34 between the open and closed positions. The handle may be attached to the door 34 by fasteners (e.g., bolts, screws, etc.) or injection molded along with the ribs 44. In configurations in which the handle is formed by injection molding, the foam may be poured over the plastic handle, or poured around the handle to provide a firm gasping surface. Similarly, in configurations in which the handle is formed by injection molding, the cover layer 50 may be secured over the plastic handle to establish a consistent appearance, or secured around the handle to provide a firm grasping surface. As will be appreciated, alternative embodiments may employ other components (e.g., knobs, recesses, etc.) in place of the handle to control movement of the door 34. For example, certain embodiments may include a handle formed by establishing a depression or recess into the cushion 46 and the cover layer 50.

In contrast to tambour door configurations having segmented show surfaces, the flexible door 34 of the present embodiments does not include separate segments that rotate relative to one another. Instead, the cushion 46 is flexible, allowing the ribs 44 to move relative to one another while maintaining a unitary visual appearance of the flexible door 34. In addition, the flexible door 34 includes a cover layer 50 secured to the outer surface of the cushion, thereby enabling the tambour door 34 to serve as an armrest for vehicle occupants. The cover layer 50 also substantially reduces or eliminates the recesses between segments that may cause pinching and collection of dirt and/or other debris. Furthermore, the cover layer 50 may include materials and/or configurations that enhance the visual appearance of the tambour door 34. For example, in certain embodiments, the cover layer 50 may be manufactured from leather, vinyl, fabric (either woven or non-woven) and/or various other materials. In the illustrated embodiment, the cover layer 50 includes a first piece of material 52 and a second piece of material 54. As discussed in further detail below, the first piece of material 52 and the second piece of material 54 are joined by a seam 56 with stitching 58. In other embodiments, the cover layer 50 may be formed from a single piece of material have no seams, or three or more pieces of material with multiple seams 56. Similarly, while the illustrated embodiment shows a seam 56 that axially bisects the flexible door 34, other embodiments may have seams 56 in other configurations, including arcs, corners, lines and/or other shapes. As discussed in further detail below, the cover layer 50 is secured to the outer surface of the cushion 46 such that the cover layer 50 may flex with the cushion 46 while substantially maintaining a substantially smooth (e.g., unwrinkled) appearance. As discussed in further detail below, the cover layer 50 may be secured to the outer surface of the cushion 46 with an adhesive connection, or via a molding process.

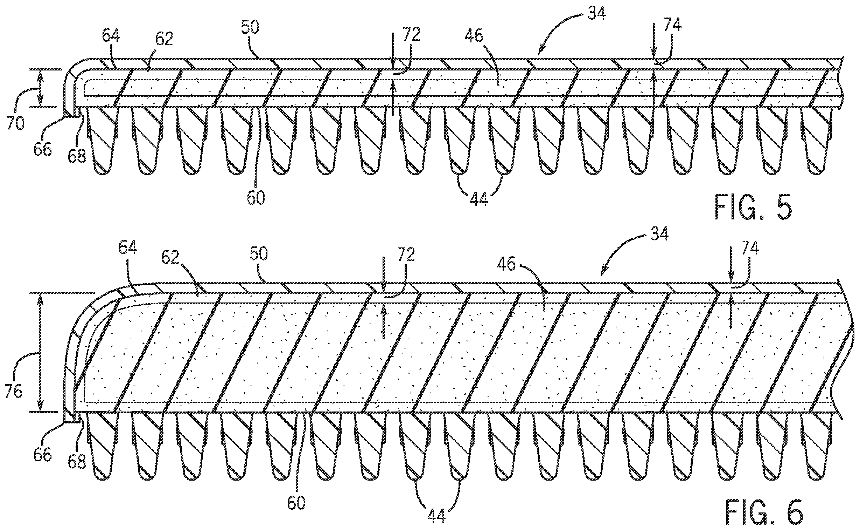

FIG. 5 is a cross-sectional view of a first embodiment of the flexible door, taken along line 5-5 of FIG. 4. As illustrated, the ribs 44 are coupled to a first surface 60 of the cushion 46 which faces the interior 42 of the console 16. As discussed in detail below, the ribs 44 may be formed by an injection molding process. As will be appreciated, injection molding involves injecting liquid resin into a mold to form a completed part. Once the ribs 44 have been formed, the ribs 44 may be placed into a mold having a cavity shaped to form the cushion 46. Foam may then be poured into the mold. As the foam expands and cures, the foam bonds to the ribs 44, thereby forming a unitary structure including the ribs 44 and the cushion 46. In certain embodiments, the material chemistry as well as temperature variations within the mold may induce the formation of a high density flexible outer skin 62 around the low density foam cushion 46, as shown in FIG. 5. In such embodiments, the cover layer 50 may be secured to an outer surface 64 of the high density flexible outer skin 62. In certain embodiments, an edge 66 of the cover layer 50 may be folded under the cushion 46 and secured to the first surface 60 of the cushion 46, or ribs 44 with a fastener 68. For example, the fastener 68 may be a staple or pin.

A thickness 70 of the cushion 46 may be configured to facilitate bending of the door 34 in a direction substantially perpendicular to an orientation of the substantially parallel ribs 44, while establishing a cushioned core suitable for use as a vehicle armrest. As will be appreciated, thicker cushions 46 may provide an armrest with enhanced comfort, while thinner cushions 46 facilitate additional flexibility. Furthermore, the cover layer 50 may be manufactured from a material such as leather, vinyl, or cloth to provide a surface suitable for use as a show surface of an armrest. By way of example, in certain embodiments, the thickness 70 may be greater than approximately 5 mm. For example, the thickness 70 may be approximately between 5 to 15, 6 to 13, 7 to 11, or about 9 mm. In addition, for cushions 46 having the integral outer skin 62, a thickness 72 of the integral outer skin 62 may be particularly selected to enable the skin to flex as the cushion 46 is compressed. For example, the thickness 72 of the integral outer skin 62 may be less than approximately 2, 1.5, 1, 0.5, 0.3, 0.2, or 0.1 mm, or less. Moreover, a thickness 74 of the cover layer 50 may also be selected to enable the cover layer 50 to flex as the cushion 46 is compressed. For example, the thickness 74 may be approximately 2, 1.5 or 1.0 mm, or less.

FIG. 6 is a cross-sectional view of a second embodiment of the flexible door 34, having a thicker cushion 46, and a cover layer 50. As previously discussed, the thicker cushion 46 may provide enhanced passenger comfort in configurations in which the tambour door 34 is used as an armrest. Similarly, the cover layer 50 may be manufactured from a material such as leather, vinyl, or cloth, as mentioned above, to provide enhanced passenger comfort. However, the thicker cushion 46 may reduce flexibility. Therefore, the illustrated tambour door 34 may be utilized in consoles 16 in which the tambour door 34 moves along a flat surface or along a surface having a large radius of curvature. For example, in certain embodiments, a thickness 76 of the cushion 46 may be greater than approximately 16 mm. By way of example, the thickness 76 may be approximately between 10 to 20, 12 to 18, 14 to 16, or about 15 mm.

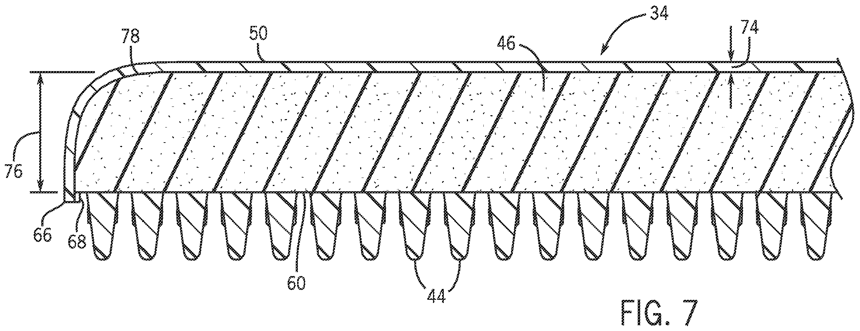

FIG. 7 is a cross-sectional view of a third embodiment of the flexible door 34, having a cushion without an integral outer skin. In the illustrated embodiment, the cushion 46 is formed from various foam compounds and/or molding processes that do not cause a high density outer skin to be formed around the low density foam cushion 46. Rather, the entire cushion 46 may have a substantially uniform low density. In such embodiments, the cover layer 50 may be secured to an outer surface 78 of the low density foam cushion 46. As discussed in further detail below, the cover layer 50 may be secured to the outer surface 78 of the cushion 46 by an adhesive connection or via a molding process.

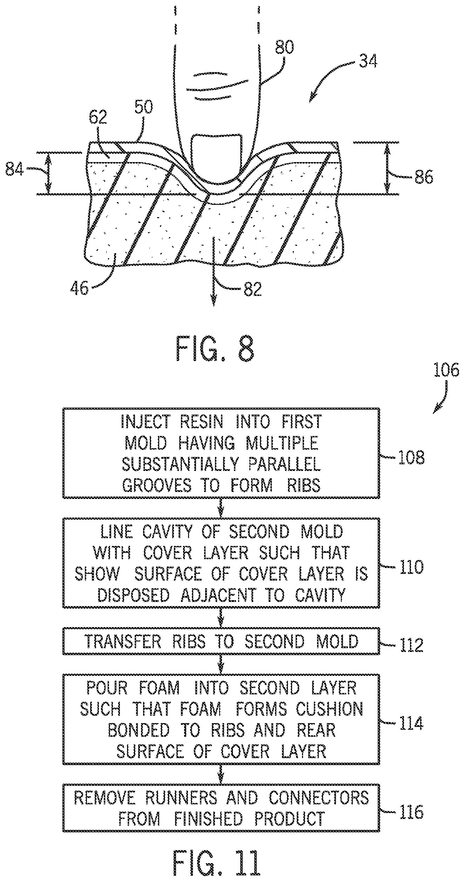

FIG. 8 is a detailed cross-sectional view of the flexible door 34, illustrating compression of the cushion 46 and corresponding flexure of the integral outer skin 62 and the cover layer 50. As previously discussed, the cushion 46 is disposed adjacent to the hard ribs 44, and configured to deform under a load. Consequently, if the tambour door 34 is used as an armrest within the vehicle interior 12, the weight of an occupant arm will be distributed across a large area of the door 34 as the cushion 46 deforms, thereby increasing occupant comfort. The integral outer skin 62 is configured to flex as the cushion 46 deforms. Similarly, the cover layer 50 is secured to the integral outer skin 62 and configured to flex as the cushion 46 deforms, thereby protecting the cushion 46 and providing a desired appearance.

As will be appreciated, softness of the cushion 46 may be measured by determining the resistance of the cushion to deformation. A variety of tests may be employed to determine the resistance to deformation of the cushion. For example, one known indentation force deflection (IFD) test measures the force sufficient to indent a 50 square inch cushion section by a fraction (e.g., 25%) of its thickness. Based on the 25% IFD test, soft materials may have a range of approximately between 6 to 24 pounds, intermediate materials may have a range of approximately between 24 to 36 pounds, and hard materials may have a range of approximately between 36 to 45 pounds. In certain embodiments, the cushion 46 may be composed of a material having a 25% IFD of approximately between 24 to 36 pounds. Such a softness range may provide a desired level of passenger comfort. However, it should be appreciated that alternative embodiments may employ cushions having a higher or lower softness to achieve the desired properties of the soft component.

In addition, the integral outer skin 62 may provide durability and support for the cover layer 50, while maintaining flexibility. As will be appreciated, flexibility and durability of the integral outer skin 62 may be measured by determining the hardness of the constituent material. One measure of hardness is the resistance to indentation, otherwise referred to as Durometer, denoted in the Shore A scale, for example. Within the Durometer scale, materials are generally characterized based on ranges. Hard or rigid elastomers generally include those having a Durometer greater than about 90 Shore A, soft elastomers generally include those having a Durometer of about 60 Shore A to about 90 Shore A, and super-soft elastomers generally include those having a Durometer below about 60 Shore A. In certain embodiments, the integral outer skin 62 may have a Durometer of approximately between 20 to 60 Shore A. Such a configuration may facilitate bending of the integral outer skin 62, while maintaining durability and smoothness. Maintaining the durability and smoothness of the integral outer skin 62 may enhance the ability of the outer skin 62 to support the cover layer 50. More specifically, a durable and smooth outer skin 62 may increase a bonding strength between the cover layer 50 and the integral outer skin 62. In alternative embodiments, the integral outer skin 62 may have a Durometer of less than 20 Shore A or more than 60 Shore A.

As illustrated, an occupant finger 80 is depressing the tambour door 34 in the direction 82, thereby inducing the integral outer skin 62 and the cover layer 50 to flex. As illustrated, where the finger 80 contacts the tambour door 34, the outer skin 62 has translated a distance 84 in the direction 82, thereby compressing the cushion 46. Similarly, the cover layer 50 has translated a distance 86 in the direction 82. As a result, a curvature is induced within the integral outer skin 62 and the cover layer 50. Because the integral outer skin 62 and the cover layer 50 are flexible, the possibility of crack formation is substantially reduced or eliminated. Furthermore, because the cushion 46 is compressible, the tambour door 34 may be suitable for use as an armrest within the vehicle interior 12.

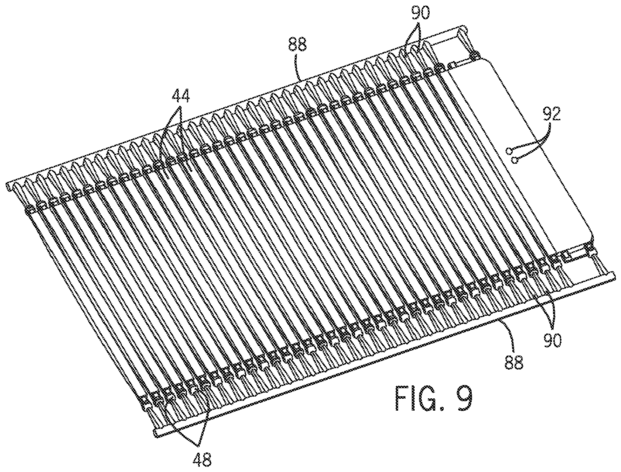

FIG. 9 is a perspective view of ribs 44 formed by an injection molding process, including attached runners and connectors. As previously discussed, injection molding involves injecting liquid resin into a mold to form a completed part. The mold includes cavities having a shape of the desired components. In certain embodiments, the mold includes a first half and a second half that are pressed together to establish the cavities. A pressurized liquid resin in then injected into the cavities via a series of flow paths or grooves. The completed part is formed as the liquid resin cures and hardens. However, residual resin remaining within the flow paths will cure and harden as well, leaving runners and connectors attached to the part.

The illustrated injection molded part includes two longitudinal runners 88 extending perpendicular to the ribs 44, and a series of connectors 90 extending between the runners 88 and the ribs 44. The runners 88 are formed by longitudinal flow paths configured to supply resin to each rib 44, while the connectors 90 are formed by flow paths extending between the longitudinal flow paths and the ribs 44. In the present embodiment, the runners 88 and connectors 90 serve to hold the ribs together after the injection molding process is complete. Specifically, the runners 88 and connectors 90 may maintain the spacing and orientation of the ribs 44 as the part is transferred from the first mold to a second mold for forming the cushion 46.

The illustrated injection molded part further includes two holes 92. As previously discussed, in certain embodiments, the tambour door 34 may include a handle attached to the tambour door 34 by fasteners such as bolts, screws, etc. In the illustrated embodiment, the holes 92 are configured to receive the fasteners for securing the handle to the tambour door 34. In other embodiments, the holes 92 may be configured to receive screw bosses, thereby enabling screws to pass through the holes 92 to secure the handle to the tambour door. The holes 92 may be formed by a punching process or other machining process. Alternatively, the mold used to create the injection molded part may be configured to form the holes 92. Furthermore, while the illustrated embodiment provides two holes 92 for mounting a handle to the tambour door 34, other embodiments may include more or fewer holes 92. As will be appreciated, other embodiments may include holes 92 for mounting other components, such as knobs or other grips, to the tambour door 34.

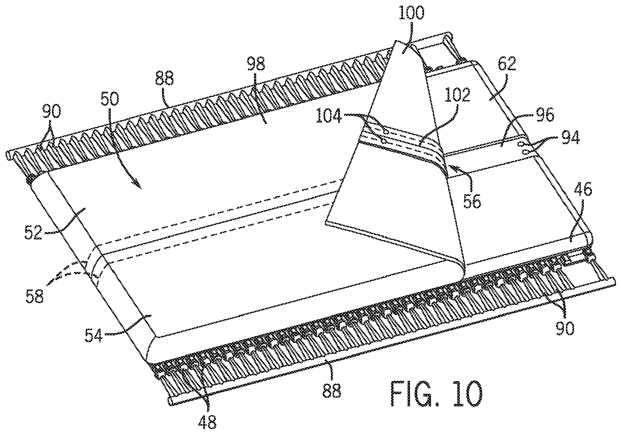

FIG. 10 is a perspective view of the ribs 44, as shown in FIG. 9, after the cushion 46 has been formed by pouring foam into a mold, and the cover layer 50 has been partially secured to the cushion 46. Once the part shown in FIG. 9 has been formed, the part may be transferred to a second mold for forming the cushion 46. In certain embodiments, the second mold may include a series of recesses configured to accept the ribs 44 formed by the injection molding process. In such embodiments, the recesses are aligned with a cavity having a shape of the desired cushion 46. Two reactive compounds are then mixed and poured into the mold, thereby forming the cushion 46. Additionally, in certain embodiments, the material chemistry as well as temperature variations within the mold may cause a high density flexible outer skin 62 to be formed around the low density foam cushion 46. In other embodiments, the material chemistry and temperature variations within the mold may facilitate formation of a low density foam cushion 46 without a high density flexible outer skin. Furthermore, the cushion 46 will bond to the ribs 44 as the foam cures. Once the molding process is complete, the part may be removed from the mold, and the runners 88 and connectors 90 may be removed from the part.

As shown, the cushion 46 further includes two holes 94. As previously discussed, in certain embodiments, the tambour door 34 may include a handle attached to the tambour door 34 by fasteners such as bolts, screws, etc. The holes 94 in the cushion 46 are configured to receive the fasteners for securing the handle to the tambour door 34. In some embodiments, the holes 94 may be created by a machining process such as drilling or cutting. In other embodiments, the mold used to form the cushion 46 may be configured to form the holes 94. As will be appreciated, the holes 94 of the cushion 46 may align with the holes 92 of the injection molded part such that each hole 94 and 92 may receive a respective fastener. Additionally, the cushion 46 also includes a seam relief 96 configured to receive the seam 56. As discussed in detail below, the cover layer 50 may include one or more seams 56 that may join one or more pieces of material as well as enhance the appearance of the cover layer 50. The seam relief 96 may be formed by cutting or milling a portion of the cushion 46 corresponding to the position of the seam 56. For example, in embodiments having the high density flexible outer skin 62, the seam relief 96 may be formed by cutting away a portion of the high density flexible outer skin 62. Alternatively, the mold used to form the cushion 46 may include a protrusion configured to form the seam relief 96 during the molding process.

As mentioned above, the illustrated embodiment further includes a cover layer 50 partially secured to the cushion 46. More specifically, the cover layer 50 includes a show surface 98 and a rear surface 100. As previously discussed, the cover layer 50 may be manufactured from leather, vinyl, fabric, a woven material, and/or a non-woven material, for example. Furthermore, as mentioned above, the cover layer 50 may include one or more seams 56 that join one or more pieces of material to form the cover layer 50, as well as enhance the appearance of the cover layer 50. For example, the seam 56 may include a French seam, a lapped seam, a bound seam, and/or a flat seam. The illustrated embodiment includes a French seam 56 formed by securing the first piece of material 52 to the second piece of material 54 with stitching 58. Moreover, the French seam 56 includes a protrusive portion 102 on the rear surface 100 of the cover layer 50. As the cover layer 50 is applied and secured to the cushion 46, the protrusive portion 102 aligns with, and is received by, the seam relief 96, as shown in FIG. 10. As will be appreciated, such a configuration provides a smooth and enhanced appearance to the show surface 98 of the cover layer 50.

As previously mentioned, the cover layer 50 may be secured to the cushion 46 by an adhesive connection. The illustrated embodiment shows the cover layer 50 partially secured to the cushion 46. In some embodiments, the adhesive connection may include glues such as polyvinyl acetate, polyvinylpyrrolidone, cyanoacrylate, epoxy resins, etc. As will be appreciated, certain adhesives may be preferred for various applications depending on the material used to manufacture the cover layer 50 (e.g., leather, vinyl, fabric, etc). Alternatively, the cover layer 50 may be secured to the cushion 46 by a molding process, as discussed in further detail below.

As previously discussed, in certain embodiments, the tambour door 34 may include a handle attached to the tambour door 34 by fasteners such as bolts, screws, etc. In the illustrated embodiment, cover layer 50 includes holes 104. The holes 104 are configured to receive the fasteners for securing the handle to the tambour door 34. The holes 104 may be formed by a machining process such as cutting or punching. As will be appreciated, the machining process used to form the holes 104 may vary depending on the material used to manufacture the cover layer 50 (e.g., leather, vinyl, cloth, etc). Furthermore, the holes 104 may align with the holes 94 of the cushion 46 and the holes 92 of the injection molded part such that each hole 104, 94 and 92 may receive a respective fastener.

FIG. 11 is a process flow diagram of an exemplary process 106 that may be utilized to form the flexible door 34. First, as represented by block 108, a resin is injected into a first mold having multiple substantially parallel grooves to form corresponding substantially parallel ribs 44. As previously discussed, the resin may be a thermoplastic polymer, such as polypropylene, polycarbonate, or acrylonitrile butadiene styrene, for example. However, as will be appreciated, any suitable resin appropriate for injection molding may be utilized in alternative embodiments. The resin may be selected to form ribs 44 having sufficient bending resistance to support the door 34 during operation.

Subsequently, a second mold having a cavity that defines the shape of the cushion 46 may be lined with a cover layer 50, as represented by block 110. More specifically, the show surface 98 of the cover layer 50 may be disposed adjacent to an inner surface of the cavity. As previously discussed, the cover layer 50 may be manufactured from leather, vinyl, fabric, a woven material, and/or a non-woven material, for example.

After the first resin has cured and/or hardened, the ribs 44 may be transferred to the second mold for forming the cushion, as represented by block 112. As previously discussed, the ribs 44 may include runners 88 and connectors 90 configured to hold the ribs 44 in the desired orientation and maintain the spacing between ribs 44. Consequently, the ribs 44 may be transferred from the first mold to the second mold as a single unit. The second mold may include recesses configured to accept the ribs 44, thereby aligning the ribs with the cavity that defines the shape of the cushion. Foam may then be poured into the second mold to form the cushion, as represented by block 114. As previously discussed, two reactive compounds may be mixed and poured into the mold, thereby forming the cushion 46. Furthermore, the cushion 46 will bond to the ribs 44 and to the rear surface 100 of the cover layer 50 as the foam cures. Once the molding process is complete, the tambour door 34 may be removed from the mold. Finally, as represented by block 116, the runners 88 and the connectors 90 are removed from the completed tambour door 34.

While only certain features and embodiments of the invention have been illustrated and described, many modifications and changes may occur to those skilled in the art (e.g., variations in sizes, dimensions, structures, shapes and proportions of the various elements, values of parameters (e.g., temperatures, pressures, etc.), mounting arrangements, use of materials, colors, orientations, etc.) without materially departing from the novel teachings and advantages of the subject matter recited in the claims. The order or sequence of any process or method steps may be varied or re-sequenced according to alternative embodiments. Furthermore, in an effort to provide a concise description of the exemplary embodiments, all features of an actual implementation may not have been described (i.e., those unrelated to the presently contemplated best mode of carrying out the invention, or those unrelated to enabling the claimed invention). It should be appreciated that in the development of any such actual implementation, as in any engineering or design project, numerous implementation specific decisions may be made. Such a development effort might be complex and time consuming, but would nevertheless be a routine undertaking of design, fabrication, and manufacture for those of ordinary skill having the benefit of this disclosure, without undue experimentation.

## Claims

1. An interior trim component for a vehicle interior storage compartment configured to enclose and expose an opening of the storage compartment and providing
a plurality of substantially parallel ribs (44);
a cushion (46) having an inner surface and an outer surface (62), wherein the inner surface is coupled to the plurality of substantially parallel ribs, and
a cover layer (50) coupled to the outer surface of the cushion (46), **characterised in that** the cover layer (50) comprises stitching configured to form a seam (56) substantially perpendicular to an orientation of the substantially parallel ribs (44).

2. The interior trim component of claim 1, wherein a thickness of the cushion (46) is configured to facilitate bending of the interior trim component in a direction substantially perpendicular to an orientation of the plurality of substantially parallel ribs (44).

3. The interior trim component of claim 1, wherein the cover layer (50) is secured to the outer surface (62) of the cushion (46) by at least one of (a) an adhesive connection, (b) a molding process.

4. The interior trim component of claim 1, wherein the cover layer (50) comprises at least one of (a) leather, (b) vinyl, (c) fabric, (d) woven fabric, (e) non-woven fabric.

5. The interior trim component of claim 1, wherein the cushion (46) comprises at least one seam relief configured to receive a seam of the cover layer (50).

6. The interior trim component of claim 5, wherein the seam relief (96) is prepared by a process comprising at least one of (a) cutting at least a portion of the cushion, (b) milling at least a portion of the cushion, (c) forming during molding of the cushion.

7. The interior trim component of claim 1 wherein the seam (56) is formed thru the cover layer (50) only.

8. The interior trim component of claim 1 wherein the cover layer (50) comprises one or more pieces of material joined by stitching through the cover layer.

9. The interior trim component of claim 1, wherein the seam (56) is aligned substantially parallel to a direction of travel of the trim component.

10. A method of manufacturing an interior trim component in a mold comprising:
providing substantially parallel ribs (44);
providing a cover layer (50);
forming a cushion (46) in the mold;
wherein the cushion (46) has an inner surface and an outer surface (62) whereas the inner surface of the cushion is coupled to the plurality of substantially parallel ribs the cushion is bonded to the ribs (44) and the cover layer (50) is secured to the outer surface of the cushion as the cushion is formed in the mold, and
wherein the cover layer (50) is stitched to form a seam (56) substantially perpendicular to an orientation of the substantially parallel ribs (44).

11. The method of claim 10, wherein the cover layer (50) comprises one or more pieces of material and stitching configured to form a seam (56) joining the one or more pieces of material.

12. The method of claim 10 or 11, wherein the seam (56) is aligned substantially parallel to a direction of travel of the component.

13. The method of claim 11, wherein the seam is formed through the cover layer (50) only.

14. The method of claim 10, wherein the cushion comprises at least one seam relief (96) formed during molding of the cushion.

15. The method of claim 10, wherein the cover layer (50) comprises at least one of (a) leather, (b) vinyl, (c) fabric, (d) woven fabric, (e) non-woven fabric.

## Patentansprüche

1. Innenverkleidungsteil für ein Fahrzeuginnenraum-Ablagefach, wobei das Innenverkleidungsteil dazu ausgebildet ist, eine Öffnung des Ablagefaches zu verschließen und freizulegen, und wobei das Innenverkleidungsteil Folgendes aufweist:
- eine Vielzahl von im Wesentlichen parallel verlaufenden Rippen (44);
- eine Polsterung (46) mit einer Innenfläche und einer Außenfläche (62), wobei die Innenfläche mit der Vielzahl von im Wesentlichen parallel verlaufenden Rippen (44) verbunden ist, und
- eine Deckschicht (50), die mit der Außenfläche (62) der Polsterung (46) gekoppelt ist
**dadurch gekennzeichnet, dass**
die Deckschicht (50) eine Naht aufweist, die dazu ausgebildet sind, einen Saum (56) auszubilden, der im Wesentlichen senkrecht zu einer Ausrichtung der im Wesentlichen parallel verlaufenden Rippen (44) verläuft.

2. Innenverkleidungsteil nach Anspruch 1,
wobei eine Dicke der Polsterung (46) dazu ausgebildet ist, ein Biegen des Innenausstattungsteils in eine Richtung zu erleichtern, die im Wesentlichen senkrecht zu der Ausrichtung der Vielzahl von im Wesentlichen parallel verlaufenden Rippen (44) ist.

3. Innenverkleidungsteil nach Anspruch 1,
wobei die Deckschicht (50) an der Außenfläche (62) der Polsterung (46) mittels (a) einer Klebeverbindung, und/oder (b) eines Gießverfahrens befestigt ist.

4. Innenverkleidungsteil nach Anspruch 1,
wobei die Deckschicht (50) (a) Leder, (b) Vinyl, (c) Stoff, (d) Gewebe, und/oder (e) Vliesstoff aufweist.

5. Innenverkleidungsteil nach Anspruch 1,
wobei die Polsterung (46) mindestens ein Saumrelief (96) aufweist, das dazu ausgebildet ist, einen Saum der Deckschicht (50) aufzunehmen.

6. Innenverkleidungsteil nach Anspruch 5,
wobei das Saumrelief (96) über ein Verfahren ausgebildet ist,
das (a) Schneiden von mindestens einem Bereich der Polsterung, (b) Fräsen von mindestens einem Bereich der Polsterung, und/oder (c) Verformen während des Ausbildens der Polsterung aufweist.

7. Innenverkleidungsteil nach Anspruch 1,
wobei der Saum (56) nur durch die Deckschicht (50) gebildet ist.

8. Innenverkleidungsteil nach Anspruch 1,
wobei die Deckschicht (50) ein Materialstück oder mehrere Materialstücke aufweist, die über eine Naht durch die Deckschicht verbunden sind.

9. Innenverkleidungsteil nach Anspruch 1,
wobei der Saum (56) im Wesentlichen parallel zu einer Bewegungsrichtung des Verkleidungsteils ausgerichtet ist.

10. Verfahren zum Herstellen eines Innenverkleidungsteils in einem Formwerkzeug, wobei das Verfahren folgende Schritte aufweist:
- Bereitstellen von im Wesentlichen parallel verlaufenden Rippen (44);
- Bereitstellen einer Deckschicht (50);
- Ausformen einer Polsterung (46) in der Werkzeugform;
wobei die Polsterung (46) eine Innenfläche und eine Außenfläche (62) aufweist, wobei die Innenfläche der Polsterung (46) mit der Vielzahl der im Wesentlichen parallel verlaufenden Rippen (44) gekoppelt wird, wobei die Polsterung (46) mit den Rippen (44) verbunden wird und die Deckschicht (50) an der Außenfläche der Polsterung (46) befestigt wird, während die Polsterung (46) in der Werkzeugform gebildet wird, und
wobei die Deckschicht (50) genäht wird, so dass sie einen Saum (56) bildet, der im Wesentlichen senkrecht zu einer Ausrichtung der im Wesentlichen parallel verlaufenden Rippen (44) verläuft.

11. Verfahren nach Anspruch 10,
wobei die Deckschicht (50) ein Materialstück oder mehrere Materialstücke und eine Naht aufweist, die dazu ausgebildet sind, einen Saum (56) zu bilden, der das eine Materialstück oder die mehreren Materialstücke verbindet.

12. Verfahren nach Anspruch 10 oder 11,
wobei der Saum (56) im Wesentlichen parallel zu einer Bewegungsrichtung der Komponente ausgerichtet ist.

13. Verfahren nach Anspruch 11,
wobei der Saum (56) nur durch die Deckschicht (50) ausgebildet wird.

14. Verfahren nach Anspruch 10,
wobei die Polsterung (46) mindestens ein Saumrelief (96) aufweist, das während des Ausbildens der Polsterung (46) gebildet wird.

15. Verfahren nach Anspruch 10,
wobei die Deckschicht (50) (a) Leder, (b) Vinyl, (c) Stoff, (d) Gewebe, und/oder (e) Vliesstoff aufweist.

## Revendications

1. Composant d'habillage intérieur pour un compartiment de stockage intérieur dans un véhicule, configuré pour enfermer et pour exposer une ouverture du compartiment de stockage et présentant une pluralité de nervures sensiblement parallèles (44),
un coussin (46) ayant une surface intérieure et une surface extérieure (62), dans lequel la surface intérieure est couplée à la pluralité de nervures sensiblement parallèles, et
une couche de couverture (50) couplée à la surface extérieure du coussin (46),
**caractérisé en ce que**
la couche de couverture (50) comprend un piquage configuré pour former une couture (56) sensiblement perpendiculaire à une orientation des nervures sensiblement parallèles (44).

2. Composant d'habillage intérieur selon la revendication 1, dans lequel une épaisseur du coussin (46) est configurée pour faciliter la flexion du composant d'habillage intérieur dans une direction sensiblement perpendiculaire à une orientation de la pluralité de nervures sensiblement parallèles (44).

3. Composant d'habillage intérieur selon la revendication 1, dans lequel la couche de couverture (50) est attachée à la surface extérieure (62) du coussin (46) parmi au moins une procédure parmi (a) une connexion adhésive, et (b) un processus de moulage.

4. Composant d'habillage intérieur selon la revendication 1, dans lequel la couche de couverture (50) comprend au moins un matériau parmi (a) cuir, (b) vinyle, (c) tissu, (d) tissu tissé, (e) tissu non-tissé.

5. Composant d'habillage intérieur selon la revendication 1, dans lequel le coussin (46) comprend au moins un relief de couture configuré pour recevoir une couture de la couche de couverture (50).

6. Composant d'habillage intérieur selon la revendication 5, dans lequel le relief de couture (96) est préparé par un processus comprenant au moins une procédure parmi (a) la découpe d'au moins une portion du coussin, (b) le grignotage d'au moins une portion du coussin, (c) le formage pendant le moulage du coussin.

7. Composant d'habillage intérieur selon la revendication 1, dans lequel la couture (56) est formée uniquement à travers la couche de couverture (50).

8. Composant d'habillage intérieur selon la revendication 1, dans lequel la couche de couverture (50) comprend un ou plusieurs morceaux de matériau réunis par un piquage à travers la couche de couverture.

9. Composant d'habillage intérieur selon la revendication 1, dans lequel la couture (56) est alignée sensiblement parallèle à une direction de déplacement du composant d'habillage.

10. Procédé de fabrication d'un composant d'habillage intérieur dans un moule, comprenant les étapes consistant à :
prévoir des nervures sensiblement parallèles (44) ;
prévoir une couche de couverture (50) ;
former un coussin (46) dans le moule ;
dans lequel le coussin (46) a une surface intérieure et une surface extérieure (62) dans lesquelles la surface intérieure du coussin est couplée à la pluralité de nervures sensiblement parallèles, le coussin est collé aux nervures (44) et la couche de couverture (50) est attachée à la surface extérieure du coussin lorsque le coussin est formé dans le moule, et
dans lequel la couche de couverture (50) est piquée pour former une couture (56) sensiblement perpendiculaire à une orientation des nervures sensiblement parallèles (44).

11. Procédé selon la revendication 10, dans lequel la couche de couverture (50) comprend un ou plusieurs morceaux de matériau et un piquage configuré pour former une couture (56) qui réunit lesdits un ou plusieurs morceaux de matériau.

12. Procédé selon la revendication 10 ou 11, dans lequel la couture (56) est alignée sensiblement parallèle à une direction de déplacement du composant.

13. Procédé selon la revendication 11, dans lequel la couture est formée uniquement à travers la couche de couverture (50).

14. Procédé selon la revendication 10, dans lequel le coussin comprend au moins un relief de couture (96) formé pendant le moulage du coussin.

15. Procédé selon la revendication 10, dans lequel la couche de couverture (50) comprend au moins un matériau parmi (a) cuir, (b) vinyle, (c) tissu, (d) tissu tissé, (e) tissu non-tissé.
